# DEMANDE DE BREVET EUROPEEN

(11) **EP 4 806 704 A1**
(43) Date de publication de la demande: **16.09.2026**
(21) Numéro de dépôt: 26150648.9
(22) Date de dépôt: 07.01.2026
(51) Int. Cl.: B60L 1/00, B60L 1/10, B60L 1/12, B60L 53/10, B60L 53/14, B60L 53/24, B60L 53/63, B60L 58/12, B60L 58/27, H01M 10/615, H01M 10/625, H02J 7/00

(54) **SYSTÈME DE RECHARGE D'UNE BATTERIE POUR VÉHICULE ÉLECTRIQUE OU HYBRIDE PERMETTANT LE RÉCHAUFFAGE DE LA BATTERIE**

(30) Priorité: 14.03.2025 FR 2502599
(71) Demandeur: AMPERE s.a.s., 92100 Boulougne-Billancourt (FR)
(72) Inventeur: BELLIOT, Guillaume, 78084 GUYANCOURT (FR); COTTE, Philippe, 78084 GUYANCOURT (FR); JANIAUD, Noelle, 78084 GUYANCOURT (FR); LESCOT, Hubert, 78084 GUYANCOURT (FR); LOUDOT, Serge, 78084 GUYANCOURT (FR); MONTI, Alessandro, 78084 GUYANCOURT (FR)
(74) Mandataire: Renault Group

(57) **Abrégé**

L'invention concerne un système de recharge pour un véhicule électrique ou hybride comprenant :
- un ensemble de consommateurs électriques (101),
- une batterie (102),
- un onduleur (103) connecté à l'ensemble de consommateurs électriques (101),
- une machine électrique (104) connectée à l'onduleur (103),
- un ensemble de filtrage (105) connecté à la machine électrique (104),
- un ensemble de contournement (106),
l'ensemble de filtrage (105) comprenant un commutateur de filtrage (110) configuré pour se fermer quand la tension externe est inférieure à la tension de batterie, et pour s'ouvrir quand la tension externe est supérieure ou égale à la tension de batterie,
l'ensemble de contournement (106) comprenant un commutateur de contournement (111). L'invention concerne également un procédé d'alimentation d'un véhicule électrique ou hybride mis en œuvre par le système de recharge.

## Description

### Domaine technique de l'invention

La présente invention concerne les systèmes de recharge pour véhicule électrique ou hybride. L'invention concerne également un procédé d'alimentation d'un véhicule électrique ou hybride.

### Etat de la technique

Les batteries au lithium en général, et plus particulièrement au lithium -fer-phosphate LFP présentent plusieurs avantages qui font qu'elles sont de plus en plus utilisées dans les véhicules électriques ou hybrides. Par exemple, les batteries LFP offrent une sécurité accrue grâce à une meilleure stabilité thermique et chimique, réduisant ainsi les risques de surchauffe et d'incendie. De plus, les batteries LFP sont plus durables, supportant un plus grand nombre de cycles de charge-décharge, ce qui prolonge leur durée de vie. Les batteries LFP sont également plus respectueuses de l'environnement, car elles utilisent des matériaux moins toxiques et plus abondants que d'autres types de batteries lithium-ion. Enfin, leur coût de production est souvent inférieur, ce qui les rend attractives pour une large gamme d'applications, notamment pour la fabrication des véhicules électriques.

Les batteries LFP voient leurs performances se dégrader dans des conditions de froid, comme en hiver. À basse température, la réaction électrochimique à l'intérieur de la batterie ralentit, ce qui réduit la puissance de la batterie. Cela se traduit par une diminution de l'autonomie et une augmentation du temps de charge. De plus, le froid augmente la résistance interne de la batterie, ce qui entraîne une perte d'efficacité énergétique.

Ces facteurs combinés rendent donc les batteries LFP moins performantes dans des climats froids, ce qui peut poser des défis pour leur utilisation dans des véhicules électriques ou des systèmes de stockage d'énergie dans des régions où les températures hivernales sont sévères.

A titre d'exemple, un utilisateur de voiture électrique équipée d'une batterie LFP qui gare son véhicule à l'extérieur par une froide journée d'hiver devra attendre un temps de recharge plus long en raison des basses températures qui dégradent la puissance de la batterie LFP.

Il existe donc un besoin de réchauffer la batterie LFP, notamment par temps froid, afin de palier la dégradation des performances de ladite batterie LFP.

Une solution existante consiste à utiliser des dispositifs de chauffage annexes tels que des résistances thermoplongeur CTP dans le circuit de refroidissement, ou encore une nappe chauffante disposée dans le fond du bac de la batterie.

Néanmoins, ces solutions présentent plusieurs inconvénients : elles sont onéreuses et requièrent une étape de fabrication additionnelle et contraignante lors de la fabrication des véhicules électriques. En outre, l'ajout de composants annexes augmente le risque de défaillance du véhicule électrique. Par ailleurs, les composants annexes réchauffent l'ensemble des modules de batterie, y compris le carter et le circuit d'eau, alors que seul le réchauffage de l'électrochimie des cellules est nécessaire, ce qui entraine un gaspillage d'énergie.

La présente invention a pour but de proposer une solution qui réponde à tout ou partie des problèmes précités. Notamment, la présente invention vise à permettre de réchauffer la batterie d'un véhicule électrique ou hybride par temps de froid de manière simple et économique.

### Objet de l'invention

La présente invention a pour but de proposer une solution qui réponde à tout ou partie des problèmes précités.

Ce but peut être atteint grâce à la mise en œuvre d'un système de recharge pour un véhicule électrique ou hybride comprenant :
- un ensemble de consommateurs électriques connectés entre une première borne primaire et une deuxième borne primaire,
- une batterie apte à fournir une tension de batterie, et apte à être connectée à la première borne primaire au moyen d'un premier relais primaire et à la deuxième borne primaire au moyen d'un deuxième relais primaire,
- un onduleur connecté à l'ensemble de consommateurs électriques entre la première borne primaire et la deuxième borne primaire et comprenant une pluralité de bras d'onduleur,
- une machine électrique connectée à l'onduleur de sorte que chaque bras d'onduleur soit respectivement relié électriquement à une bobine d'un stator de la machine électrique,
- un ensemble de filtrage connecté à la machine électrique et apte à être connecté à une première borne secondaire du système de recharge au moyen d'un premier relais secondaire et à une deuxième borne secondaire du système de recharge au moyen d'un deuxième relais secondaire,
   les première et deuxième bornes secondaires étant destinées à être connectées à une source électrique externe au véhicule,
   la source électrique externe étant destinée à fournir une tension externe,
- un ensemble de contournement connecté entre la première borne secondaire et la première borne primaire,
   l'ensemble de filtrage comprenant un commutateur de filtrage configuré pour se fermer quand la tension externe est inférieure à la tension de batterie, et pour s'ouvrir quand la tension externe est supérieure ou égale à la tension de batterie,
   l'ensemble de contournement comprenant un commutateur de contournement apte à se fermer pour assurer une connexion électrique entre la première borne secondaire et la première borne primaire, et à s'ouvrir pour empêcher la connexion électrique entre la première borne secondaire et la première borne primaire.

Le système peut en outre présenter une ou plusieurs des caractéristiques suivantes, prises seules ou en combinaison.

Selon une caractéristique du système, si la température de la batterie est inférieure à un seuil de température prédeterminé, l'onduleur peut être piloté de sorte à permettre un échange d'énergie électrique entre la batterie et le stator de la machine électrique via l'onduleur de sorte à augmenter la température de la batterie jusqu'au seuil de température prédeterminé.

Selon une caractéristique du système, le système de recharge peut être configuré pour avoir l'un parmi les modes de fonctionnement suivant:
- un premier mode, dit de veille, dans lequel
   chacun des premier commutateur primaire, deuxième commutateur primaire, premier commutateur secondaire, deuxième commutateur secondaire, commutateur de filtrage et commutateur de contournement est ouvert,
- un deuxième mode, dit de préconditionnement, dans lequel
   si la température de la batterie est inférieure à un seuil de température prédéterminé,
   le premier commutateur primaire et le deuxième commutateur primaire sont fermés, le premier commutateur secondaire, le deuxième commutateur secondaire, et le commutateur de contournement sont ouverts, et l'onduleur est piloté de sorte à permettre un échange d'énergie électrique entre la batterie et le stator de la machine électrique via l'onduleur,
- un troisième mode, dit de charge alternative, dans lequel le système est connectée à la source électrique externe, le premier commutateur primaire et le deuxième commutateur primaire sont fermés, le premier commutateur secondaire, le deuxième commutateur secondaire, et le commutateur de contournement sont ouverts, et la batterie fournit une énergie électrique à l'ensemble de consommateurs électriques,
- un quatrième mode, dit d'arrêt, dans lequel le premier commutateur primaire et le deuxième commutateur primaire sont fermés, le premier commutateur secondaire, et le deuxième commutateur secondaire sont ouverts, et l'onduleur est piloté de sorte à permettre un échange d'énergie électrique entre la batterie et le stator de la machine électrique via l'onduleur quand le commutateur de contournement est fermé,
- un cinquième mode, dit de roulage, dans lequel le premier commutateur primaire et le deuxième commutateur primaire sont fermés, le premier commutateur secondaire, et le deuxième commutateur secondaire sont ouverts, et la batterie fournit une énergie électrique à la fois à l'ensemble de consommateurs électrique, à l'onduleur, et à la machine électrique.

Selon une caractéristique du système, le système de recharge peut être configuré pour avoir l'un parmi les modes de fonctionnement suivant: si la source électrique externe fournit une tension externe continue et supérieure ou égale à la tension de la batterie, le système de recharge peut avoir l'un des modes de fonctionnement suivant:
- un sixième mode, dit de recharge à froid avant branchement, dans lequel
   si la température de la batterie est inférieure au seuil de température prédeterminé, et
   si le système n'est pas connecté à la source électrique externe, le premier commutateur primaire et le deuxième commutateur primaire sont fermés, le premier commutateur secondaire, et le deuxième commutateur secondaire sont ouverts, le commutateur de contournement est ouvert, la batterie alimentant électriquement l'ensemble des consommateurs électriques et l'onduleur et la machine électrique;
- un sixième mode bis, dit de recharge à froid au branchement, si le système est connecté à la source électrique externe fournissant une tension continue, et
   si la température de la batterie est inférieure au seuil de température prédeterminé,
   le système communique avec la source électrique externe afin que ladite source électrique externe fournisse une tension ayant la même valeur que la tension de la batterie, et dès que la tension fournie par la source électrique externe devient égale à la tension de la batterie, le commutateur de contournement est fermé dans un premier temps et le deuxième commutateur secondaire est fermé dans un deuxième temps;
- un sixième mode ter, dit de chauffage pendant le branchement, si le système est connecté à la source électrique externe fournissant une tension continue, et
   si la température de la batterie est inférieure au seuil de température prédeterminé mais que ladite température de la batterie est en cours d'augmentation,
      l'onduleur est piloté de sorte à permettre un échange d'énergie entre la batterie et le stator de la machine électrique afin de réchauffer la batterie jusqu'à ce que la température de la batterie atteigne le seuil de température prédeterminé,
   le système communique avec la source électrique externe afin que la source électrique externe alimente l'ensemble de consommateurs électriques;
- un sixième mode quater, dit de charge continue standard,

si le système est connecté à la source électrique externe fournissant une tension continue, et
si la batterie a une température au moins égale au seuil de température prédeterminé,
l'onduleur est piloté de sorte à ne plus permettre l'échange d'énergie entre la batterie et les bobines de stator pour réchauffer la batterie,
le premier commutateur secondaire est fermé, le commutateur de contournement est ouvert, et le système communique avec la source électrique externe afin que ladite source électrique externe augmente le courant fourni au système, de sorte à recharger la batterie via les inductances du stator.

Selon une caractéristique du système, si la source électrique externe fournit une tension externe continue et si la tension externe est inférieure à la tension de batterie, le système peut avoir le mode de fonctionnement suivant :
- un septième mode, dit de charge à courant continu, dans tous les commutateurs sont fermés à l'exception du commutateur de contournement qui est ouvert.

Selon une caractéristique du système, l'ensemble de contournement comprend un dispositif semi-conducteur connecté en série avec le commutateur de contournement.

Selon une caractéristique du système, le dispositif semi-conducteur est configuré pour permettre une circulation du courant électrique uniquement de la source électrique externe vers l'ensemble de consommateurs électriques.

Selon une caractéristique du système, le dispositif semi-conducteur est une diode et le commutateur de contournement est un relais.

Selon une caractéristique du système, l'ensemble de filtrage comprend un condensateur de filtrage en série avec le commutateur de filtrage, et une résistance connectée en parallèle du condensateur de filtrage.

Selon une caractéristique du système, le commutateur de contournement comprend un dispositif d'aiguillage, et l'ensemble de consommateurs comprend un chargeur embarqué connecté entre la première borne primaire et la deuxième borne primaire, et connecté d'une part à un compresseur de climatisation, et d'autre part à un convertisseur courant continu-courant continu, le dispositif d'aiguillage étant configuré pour se connecter électriquement au compresseur de climatisation et pour relier sélectivement le compresseur de climatisation à la source électrique externe ou à la batterie.

L'invention concerne en outre un véhicule électrique ou hybride comprenant le système décrit ci-avant.

L'invention concerne en outre une structure de recharge pour véhicule électrique ou hybride comprenant :
- le système de recharge décrit ci-avant,
- la source électrique externe connectée au système de recharge.

L'invention concerne en outre un procédé d'alimentation d'un véhicule électrique ou hybride, le procédé étant mis en œuvre par le système de recharge décrit ci-avant,
le procédé d'alimentation comprenant une étape de sélection d'un mode de fonctionnement du système parmi les modes de fonctionnement du système présentés ci-avant, en fonction de l'un ou plusieurs des paramètres suivants :
- la valeur de la tension externe,
- la température de la batterie,
- le branchement ou non du système à la source électrique externe,
- un état de charge de la batterie.

Selon une caractéristique du procédé, si la source électrique externe fournit une tension continue supérieure ou égale à la tension de la batterie, et si la température de la batterie est inférieure à un seuil de température prédéterminé,
une sélection successive des modes de fonctionnement M6, M6 bis, M6 ter et M6 quater du système s'opère, et le procédé comprend les étapes suivantes:
- fermeture du premier commutateur primaire et du deuxième commutateur primaire, ouverture du premier commutateur secondaire, du deuxième commutateur secondaire et du commutateur de contournement,
- branchement du système à la source électrique externe,
- fermeture du commutateur de contournement dans un premier temps et du deuxième commutateur secondaire dans un deuxième temps,
- tant que la température de la batterie est inférieure au seuil de température prédéterminé, pilotage de l'onduleur de sorte à permettre un échange d'énergie entre la batterie et le stator de la machine électrique afin de réchauffer la batterie jusqu'à ce que la température de la batterie atteigne le seuil de température prédéterminé,
- quand la température de la batterie est supérieure ou égale au seuil de température prédéterminé, pilotage de l'onduleur de sorte à ne plus permettre l'échange d'énergie entre la batterie et les bobines de stator, et fermeture du premier commutateur secondaire et ouverture du commutateur de contournement.

### Description sommaire des dessins

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
[Fig.1] représente un premier mode de réalisation d'un système de recharge d'un véhicule électrique ou hybride selon l'invention.
[Fig.2] représente un deuxième mode de réalisation du système de recharge d'un véhicule électrique ou hybride selon l'invention.
[Fig.3] représente un troisième mode de réalisation du système de recharge d'un véhicule électrique ou hybride selon l'invention.

### Description détaillée

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

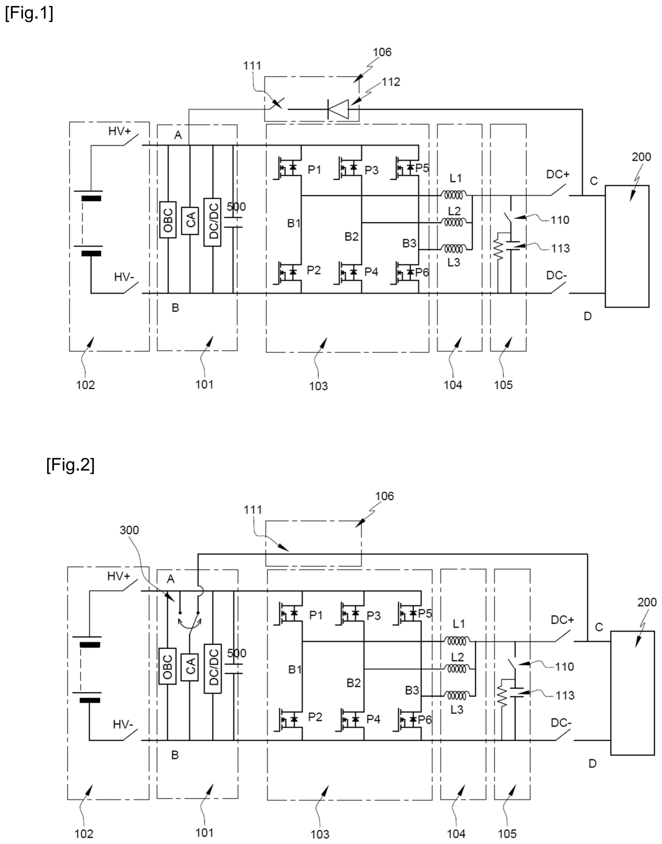

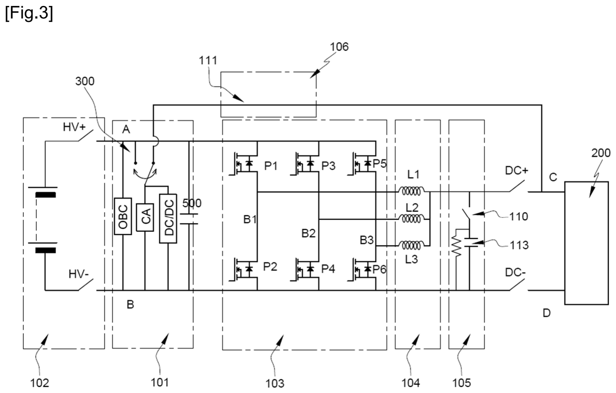

L'invention concerne un système de recharge pour un véhicule électrique ou hybride. Un premier mode de réalisation de ce système est présenté à la figure 1, un deuxième mode de réalisation est présenté à la figure 2, et un troisième mode de réalisation est présenté à la figure 3.

Le système comprend:
- un ensemble de consommateurs électriques 101 connectés entre une première borne primaire A et une deuxième borne primaire B,
- une batterie 102 apte à fournir une tension de batterie, et apte à être connectée à la première borne primaire A au moyen d'un premier relai primaire HV+ et à la deuxième borne primaire B au moyen d'un deuxième relais primaire HV-,
- un onduleur 103 connecté à l'ensemble de consommateurs électriques 101 entre la première borne primaire A et la deuxième borne primaire B et comprenant une pluralité de bras d'onduleur,
- une machine électrique 104 connectée à l'onduleur 103 de sorte que chaque bras d'onduleur soit respectivement relié électriquement à une bobine d'un stator de la machine électrique 104,
- un ensemble de filtrage 105 connecté à la machine électrique 104 et apte à être connecté à une première borne secondaire C du système de recharge au moyen d'un premier relai secondaire DC+ et à une deuxième borne secondaire D du système de recharge au moyen d'un deuxième relais secondaire DC-,
- un ensemble de contournement 106 connecté entre la première borne secondaire C et la première borne primaire A.

Les première et deuxième bornes secondaires C, D sont destinées à être connectées à une source électrique externe 200 au véhicule.

Par « externe au véhicule », on entend que la source électrique externe 200 est située en dehors du véhicule qui comprend le système de recharge et ne fait pas partie du véhicule.

Par « ensemble de consommateurs électriques », on entend un ensemble comprenant un ou plusieurs dispositifs électriques.

La source électrique externe 200 est destinée à fournir une tension externe. La source de tension externe peut être une borne de recharge, par exemple une borne de recharge à courant continu ou à courant alternatif pour un véhicule électrique ou hybrique, notamment une borne apte à fournir une tension allant de 0V à 1000V.

La batterie 102 peut fournir une tension de batterie d'environ 800V.

L'onduleur 103 connecté à la batterie 102 peut comprendre une pluralité de bras d'onduleur B1, B2, B3. Par exemple, dans les figures 1 et 2, l'onduleur principal 101 comprend trois bras d'onduleurs B1, B2, B3. Chaque bras d'onduleur peut comprendre deux transistors P1, P2, P3, P4, P5, P6, par exemple des IGBT ou MOSFET, apte à commuter de manière complémentaire à une fréquence de commutation prédéterminée qui peut être d'au moins 100 Hz.

Selon une alternative, l'onduleur 103 peut comprendre n bras d'onduleurs, n étant un entier supérieur ou égal à 2.

Le stator de la machine électrique 104 comprend une pluralité de bobines statoriques L1, L2, L3. Dans l'exemple de la figure 1, le stator comprend trois bobines statoriques L1, L2, L3. Chaque bobine statorique L1, L2, L3 est reliée à un bras d'onduleur correspondant B1, B2, B3 comme présenté à la figure 1.

Les bobines statoriques peuvent chacune avoir une valeur comprise entre 200 µH et 1000 µH.

Le système peut comprendre en outre un condensateur de liaison DC 500 qui peut avoir une valeur de capacité comprise entre 100 µF et 700 µF.

L'onduleur 103 peut être piloté ou commandé de sorte à permettre un échange d'énergie entre la batterie 102 et les bobines du stator L1, L2, L3.

Autrement dit, l'onduleur 103 est configuré pour présenter une première configuration dans laquelle ledit onduleur 103 permet un transfert d'une énergie électrique depuis la batterie 102 vers les bobines statoriques L1, L2, L3 à travers l'onduleur 103.

Dans la première configuration, on peut avoir les transistors P1, P3, P6 conducteurs ou fermés tandis que les transistors P2, P4, P5 sont bloqués ou ouverts. Ainsi, dans la première configuration, la batterie 102 est connectée au stator de la machine électrique 104. Le courant statorique augmente jusqu'à atteindre un premier seuil de courant. A l'atteinte de ce premier seuil de courant, l'onduleur bascule de la première configuration à une deuxième configuration.

Toujours dans la première configuration, et selon une alternative, il est possible de n'utiliser que deux bras d'onduleurs, et dans ce cas, les transistors P5, P6 sont toujours ouverts, alors que P1 et P4 sont fermés pour faire croitre le courant dans les bras d'onduleurs, donc pour faire croitre également le courant statorique.

Plus généralement, la première configuration implique une combinaison d'état (ouvert ou fermé) pour les transistors permettant la circulation du courant de la batterie 102 vers les bobines statoriques L1, L2, L3.

Dans la deuxième configuration, l'onduleur 103 permet un transfert d'au moins une partie de l'énergie électrique des bobines statoriques L1, L2, L3 vers la batterie 102 à travers l'onduleur 103. Dans la deuxième configuration, on peut avoir les transistors P1, P3, P6 bloqués ou ouverts tandis que les transistors P2, P4, P5 conducteurs ou fermés.

Toujours dans la deuxième configuration, et selon une alternative, il est possible de n'utiliser que deux bras d'onduleurs, et dans ce cas, les transistors P5, P6 sont toujours ouverts, alors que P2 et P3 sont fermés pour faire décroitre le courant dans les bras d'onduleurs, donc pour faire décroitre également le courant statorique.

Dans cette deuxième configuration, au moins une partie de l'énergie électrique stockée dans les inductances statoriques L1, L2, L3 est déchargée dans la batterie 102. Le transfert d'au moins une partie de l'énergie électrique des bobines statoriques L1, L2, L3 vers la batterie 102 assure un réchauffage de la batterie 102.

Plus généralement, la deuxième configuration implique une combinaison d'état (ouvert ou fermé) pour les transistors permettant la circulation du courant des bobines statoriques L1, L2, L3 vers la batterie 102.

De manière avantageuse, le système permet de générer des pertes thermiques à l'intérieur même des cellules de la batterie 102, ce qui est plus efficace puisque la chaleur est générée directement au sein de la chimie de la batterie 102 sans réchauffer des composants non ciblés comme le carter de la batterie par exemple.

Le système permet également d'obtenir un réchauffage homogène de la batterie 102.

Le système peut en outre comprendre un contrôleur, comme un microprocesseur ou un microcontrôleur, qui pilote l'onduleur 103 et provoque la commutation de l'onduleur 103 de la première configuration à la deuxième configuration et inversement.

Le contrôleur peut être relié à un capteur de courant apte à détecter le premier seuil de courant et le deuxième seuil de courant.

De manière avantageuse, le système est compatible à la fois avec une borne de recharge de 800V et avec une borne de recharge de 400V.

Pour que le système fonctionne avec une borne de recharge de 400V, le commutateur de filtrage 110 doit être fermé.

L'ensemble de consommateurs 101 peut comprendre un chargeur embarqué OBC connecté entre la première borne primaire A et la deuxième borne primaire B, et connecté d'une part à un compresseur de climatisation CA, et d'autre part à un convertisseur courant continu-courant continu DC/DC.

Le compresseur de climatisation CA permet un confort thermique du véhicule.

Le chargeur embarqué OBC permet de recharger la batterie 102 avec un courant alternatif.

Le convertisseur courant continu/courant continu DC/DC permet d'alimenter le réseau basse tension du véhicule.

L'ensemble de filtrage 105 comprend un commutateur de filtrage 110 qui peut se fermer quand la tension externe est inférieure à la tension de batterie, et qui peut s'ouvrir quand la tension externe est supérieure ou égale à la tension de batterie.

L'ensemble de filtrage 105 peut comprendre un condensateur de filtrage 113 en série avec le commutateur de filtrage 110, et une résistance connectée en parallèle du condensateur de filtrage 113. La résistance permet une décharge lente du condensateur de filtrage 113 et assure ainsi une sécurité de fonctionnement du système.

L'ensemble de contournement 106 comprend un commutateur de contournement 111 apte à se fermer pour assurer une connexion électrique entre la première borne secondaire C et la première borne primaire A, et à s'ouvrir pour empêcher la connexion électrique entre la première borne secondaire C et la première borne primaire A.

Le système est remarquable en ce que l'ensemble de contournement 106 peut connecter la source électrique externe 200 à l'ensemble de consommateurs électriques 101. En particulier, l'ensemble de contournement 106 peut connecter la borne électrique directement au compresseur de climatisation CA.

Par « directement connecter », on entend que la connexion peut se faire de la borne électrique au compresseur de climatisation CA sans passer par l'onduleur 103 ou la machine électrique 104.

De manière avantageuse, l'ensemble de contournement 106 permet à la borne de charge de 800V d'injecter du courant électrique dans le véhicule pour alimenter le compresseur de climatisation CA et le convertisseur DC/DC, pendant que l'onduleur 103 est piloté de sorte à réchauffer la batterie 102.

L'ensemble de contournement 106 peut comprendre un dispositif semi-conducteur 112 connecté en série avec le commutateur de contournement 111.

Le dispositif semi-conducteur 112 peut permettre une circulation du courant électrique (et donc de la puissance) uniquement de la source électrique externe 200 vers l'ensemble de consommateurs électriques 101, autrement dit le dispositif semi-conducteur 112 peut permettre une circulation du courant dans un sens et pas dans l'autre.

Le dispositif semi-conducteur 112 peut être une diode et le commutateur de contournement 111 est un relais.

De manière avantageuse, le relais permet de connecter ou de déconnecter l'ensemble de contournement 106, ce qui aide à contrôler le flux de courant dans le système et la diode permet au courant de passer dans une seule direction. Elle bloque les oscillations de courant qui pourraient se diriger vers la source électrique externe 200. Ainsi, en bloquant ces oscillations, la diode empêche les variations rapides de tension, ce qui réduit les fluctuations de tension.

De manière alternative, le commutateur de contournement peut être un IGBT ou deux MOSFET disposés tête-bêche.

Si la température de la batterie 102 est inférieure à un seuil de température prédeterminé, par exemple 0°C, l'onduleur 103 peut être piloté de sorte à permettre un échange d'énergie électrique entre la batterie 102 et le stator de la machine électrique 104 via l'onduleur 103 de sorte à augmenter la température de la batterie 102 jusqu'au seuil de température prédeterminé.

Selon un deuxième mode de réalisation présenté à la figure 2, le commutateur de contournement 111 peut comprendre un dispositif d'aiguillage 300. Dans ce cas, le dispositif d'aiguillage 300 est connecté au compresseur de climatisation CA et permet de relier électriquement le compresseur de climatisation CA sélectivement à la source électrique externe 200, notamment à travers l'ensemble de contournement 106, ou à la batterie 102.

Le dispositif d'aiguillage 300 est utilisé pour permettre un réchauffage de la batterie 102. A cette fin, le premier relai secondaire DC+ est ouvert et en même temps la source électrique externe 200 alimente au moins un consommateur électrique dans l'ensemble de consommateurs électriques 101, notamment le compresseur de climatisation CA. Lorsque la température de la batterie 102 atteint le seuil de température prédéterminé, le dispositif d'aiguillage 300 connecte l'ensemble de consommateurs électriques 101 à la batterie 102, le premier relai secondaire DC+ se ferme, et la source électrique externe 200 charge la batterie 102 via les inductances du stator L1, L2, L3.

La figure 3 présente un troisième mode de réalisation en tout point identique au deuxième mode de réalisation, à la différence près que le convertisseur DC/DC n'est pas connecté entre la première borne primaire A et la deuxième borne primaire B mais plutôt entre la deuxième borne primaire B et le dispositif d'aiguillage 300.

Le système de recharge peut avoir un mode de fonctionnement défini par un ou plusieurs des facteurs suivants:
- une nature de la source électrique externe 200, par exemple s'il s'agit d'une borne de recharge 400V ou 800V,
- la température de la batterie 102,
- le branchement ou non à la source électrique externe 200.

Le système de recharge peut notamment avoir un mode de fonctionnement sélectionné parmi les modes de fonctionnement décrit ci-après.

Dans un premier mode M1, dit de veille, chacun des premier commutateur primaire HV+, deuxième commutateur primaire HV-, premier commutateur secondaire DC+, deuxième commutateur secondaire DC-, commutateur de filtrage 110 et commutateur de contournement 111 est ouvert. Dans ce mode M1, le véhicule est endormi et il n'y a pas besoin d'un préconditionnement thermique de la batterie 102. La batterie 102 n'est pas connectée à l'onduleur 103, ni à l'ensemble de consommateurs électriques 101.

Dans un deuxième mode M2, dit de préconditionnement, dans lequel la température de la batterie 102 est inférieure à un seuil de température prédéterminé, le premier commutateur primaire HV+ et le deuxième commutateur primaire HV- sont fermés, le premier commutateur secondaire DC+, le deuxième commutateur secondaire DC-, et le commutateur de contournement 111 sont ouverts, et l'onduleur 103 est piloté de sorte à permettre un échange d'énergie électrique entre la batterie 102 et le stator de la machine électrique 104 via l'onduleur 103. Dans ce mode M2, la batterie 102 et/ou l'habitacle du véhicule sont réchauffés à travers l'échange d'énergie entre l'onduleur 103 et les bobines statoriques L1, L2, L3 comme décrit ci-avant.

Dans un troisième mode M3, dit de charge alternative, le système est connecté à la source électrique externe 200. Le premier commutateur primaire HV+ et le deuxième commutateur primaire HV- sont fermés, le premier commutateur secondaire DC+, le deuxième commutateur secondaire DC-, et le commutateur de contournement 111 sont ouverts, et la batterie 102 fournit une énergie électrique à l'ensemble de consommateurs électriques 101. Dans ce mode M3, le chargeur embarqué OBC charge la batterie 102 et alimente l'ensemble des consommateurs électriques, notamment le convertisseur DC/DC et le réseau basse tension du véhicule. Dans ce mode M3, l'optimisation du temps de charge ne nécessite pas nécessairement un réchauffage de la batterie 102 mais l'habitacle et/ou la batterie 102 peuvent être réchauffées par l'échange d'énergie entre l'onduleur 103 et les bobines statoriques L1, L2, L3 comme décrit ci-avant.

Dans un quatrième mode M4, dit d'arrêt, le véhicule est à l'arrêt et le conducteur du véhicule est présent dans le véhicule. Dans ce mode M4, le premier commutateur primaire HV+ et le deuxième commutateur primaire HV-sont fermés, le premier commutateur secondaire DC+, et le deuxième commutateur secondaire DC- sont ouverts, et l'onduleur 103 est piloté de sorte à permettre un échange d'énergie électrique entre la batterie 102 et le stator de la machine électrique 104 via l'onduleur 103 quand le commutateur de contournement 111 est fermé. Dans ce mode M4, La batterie 102 alimente le compresseur de climatisation CA et le convertisseur DC/DC. L'habitacle et/ou la batterie 102 peuvent être réchauffées comme décrit ci-avant.

Dans un cinquième mode M5, dit de roulage, le véhicule est en roulage et le conducteur du véhicule requiert du couple moteur. Dans ce mode M5, le premier commutateur primaire HV+ et le deuxième commutateur primaire HV- sont fermés, le premier commutateur secondaire DC+, et le deuxième commutateur secondaire DC- sont ouverts, et la batterie 102 fournit une énergie électrique à la fois à l'ensemble de consommateurs électrique 101, à l'onduleur 103, et à la machine électrique 104.

Si le système n'est pas branché à la source électrique externe 200, et si la tension fournie par la source électrique externe 200 est supérieure ou égale à la tension de la batterie 102, et si la température de la batterie 102 est inférieure au seuil de température prédeterminé alors le système est dans un sixième mode M6, dit de recharge à froid avant branchement. Le premier commutateur primaire HV+ et le deuxième commutateur primaire HV- sont fermés, le premier commutateur secondaire DC+, et le deuxième commutateur secondaire DC- sont ouverts et le commutateur de contournement 111 est ouvert. Dans ce sixième mode M6, la batterie 102 alimente électriquement l'ensemble des consommateurs électriques 101, l'onduleur 103 et la machine électrique 104.

Le système est dans un sixième mode bis M6bis, dit de recharge à froid au branchement, si le système est connecté à la source électrique externe 200 fournissant une tension continue, et la tension fournie par la source électrique externe 200 est supérieure ou égale à la tension de la batterie 102, et la température de la batterie 102 est inférieure au seuil de température prédeterminé.

Dans ce mode M6bis, le système est en communication avec la source électrique externe 200 afin que ladite source externe fournisse une tension ayant la même valeur que la tension de la batterie 102, par exemple 800V. Lorsque la tension fournie par la source électrique externe 200 devient égale à la tension de la batterie 102, le commutateur de contournement 111 est fermé dans un premier temps et le deuxième commutateur secondaire DC- est fermé dans un deuxième temps.

L'ordre de fermeture commutateur de contournement 111 et du deuxième commutateur secondaire DC- est important puisque l'ensemble de contournement 106 est dimensionné pour un courant électrique relativement faible, de quelques dizaines d'ampère, tandis que le deuxième commutateur secondaire DC- est beaucoup plus robuste et permet de passer plusieurs centaines d'ampère.

De manière avantageuse, le système est dimensionné de sorte à faire passer un potentiel courant d'appel dans le deuxième commutateur secondaire DC- plutôt qu'à travers l'ensemble de contournement 106.

Le système est dans un sixième mode ter M6 ter, dit de chauffage pendant le branchement, si le système est connecté à la source électrique externe 200 fournissant une tension continue, et la tension fournie par la source électrique externe 200 est supérieure ou égale à la tension de la batterie 102, et la température de la batterie 102 est inférieure au seuil de température prédeterminé mais que ladite température de la batterie est en cours d'augmentation.

Dans ce sixième mode ter M6ter, l'onduleur 103 est piloté de sorte à permettre un échange d'énergie entre la batterie 102 et le stator de la machine électrique 104 afin de réchauffer la batterie 102 jusqu'à ce que la température de la batterie 102 atteigne le seuil de température prédeterminé. Dans ce mode M6ter, le système est en communication avec la source électrique externe 200 et lui envoie une consigne de courant afin que la source électrique externe 200 alimente l'ensemble de consommateurs électriques 101, notamment le compresseur de climatisation CA et le convertisseur DC/DC.

Par exemple, la source électrique externe 200 fournit une puissance de 5kW à l'ensemble de consommateurs électriques 101 et un courant compris entre 6 et 8 A.

Contrairement aux systèmes traditionnels, la source électrique externe 200 continuera à fournir de l'énergie électrique au système décrit. Cela est possible parce que les variations de tension sont faibles, car la source est directement connectée à la batterie 102 et délivre un courant minimal. Ainsi, le conducteur pourra voir que la charge est en cours, même si elle est de faible puissance. Le système peut en outre comprendre une interface homme-machine pour avertir le conducteur que la batterie 102 est en cours de chauffage et l'informer du temps total de chauffe et de recharge.

Le système est dans un sixième mode quater M6 quater, dit de charge continue standard, si le système est connecté à la source électrique externe 200 fournissant une tension continue, et si la batterie 102 a une température au moins égale au seuil de température. Dans ce sixième mode quater M6 quater, l'onduleur 103 est piloté de sorte à ne plus permettre l'échange d'énergie entre la batterie et les bobines de stator L1, L2, L3 pour réchauffer la batterie. Le premier commutateur secondaire DC+ est fermé, le commutateur de contournement est ouvert et le système envoie une consigne de courant vers la source électrique externe afin que celle-ci augmente le courant fourni au système, jusqu'à par exemple plusieurs centaines d'ampères. Le courant électrique fourni par la source électrique externe 200 charge alors la batterie 102 via les inductances du stator L1, L2, L3.

Pour les modes M6 bis, M6 ter et M6 quater, la tension continue fournie par la source électrique externe 200 peut avoir une valeur de 800V.

Selon une possibilité, le commutateur de contournement 111 et le fil électrique le connectant d'une part à la batterie 102 et d'autre part à la source électrique externe 200 peuvent être dimensionnés pour faire passer un courant de plusieurs centaines d'ampère.

Dans ce cas, le commutateur de contournement 111 peut rester fermé et le courant circule directement de la source électrique externe 200 à la batterie 102 sans passer par les inductances du stator L1, L2, L3.

Le système est dans un septième mode M7, dit de charge à courant continu, si la tension externe est inférieure à la tension de batterie 102 et la source de tension externe 200 fournit une tension continue, notamment une tension continue de 400V. Dans ce septième mode M7, tous les commutateurs sont fermés à l'exception du commutateur de contournement 111 qui est ouvert.

De manière avantageuse, le fait que le commutateur de contournement 111 soit ouvert permet d'éviter un court-circuit entre la borne et la batterie 102.

Dans ce septième mode M7, la batterie 102 n'est pas réchauffée par un échange d'énergie entre l'onduleur 103 et les bobines statoriques L1, L2, L3 mais cela ne constitue pas un problème car, par exemple, une prestation de recharge d'une batterie 800V sur une borne 400V n'est pas limitée par une température relativement faible de la batterie.

Pour le septième mode M7, la tension continue fournie par la source électrique externe 200 peut avoir une valeur de 400V.

De manière avantageuse, le système permet de chauffer très rapidement la batterie 102 d'un véhicule électrique avec la méthode dite self-heating ou HF heating tout en permettant une charge DC 800V d'un véhicule.

L'invention concerne en outre une structure de recharge pour véhicule électrique ou hybride comprenant :
- le système de recharge décrit ci-avant,
- la source électrique externe 200 connectée au système de recharge.

L'invention concerne en outre un procédé d'alimentation d'un véhicule électrique ou hybride comprenant le système de recharge décrit ci-avant.

Le procédé d'alimentation est mis en œuvre par le système de recharge décrit ci-avant.

Le procédé d'alimentation comprend une étape de sélection d'un mode de fonctionnement du système parmi les modes de fonctionnement du système M1 à M7 présentés ci-avant en fonction de l'un ou plusieurs des paramètres suivants : la valeur de la tension externe, la température de la batterie 102, le branchement ou non du système à la source électrique externe 200, un état de charge de la batterie SoC.

Par exemple, si la source électrique externe 200 fournit une tension continue supérieure ou égale à la tension de la batterie 102, et si la température de la batterie 102 est inférieure à un seuil de température prédéterminé, une sélection successive des modes de fonctionnement M6, M6 bis, M6 ter et M6 quater s'opère, et le procédé comprend les étapes suivantes:
- fermeture du premier commutateur primaire HV+ et du deuxième commutateur primaire HV-, ouverture du premier commutateur secondaire DC+, du deuxième commutateur secondaire DC- et du commutateur de contournement 111,
- branchement du système à la source électrique externe 200,
- fermeture du commutateur de contournement 111 dans un premier temps et du deuxième commutateur secondaire DC- dans un deuxième temps,
- tant que la température de la batterie 102 est inférieure au seuil de température prédéterminé, pilotage de l'onduleur de sorte à permettre un échange d'énergie entre la batterie 102 et le stator de la machine électrique 104 afin de réchauffer la batterie 102 jusqu'à ce que la température de la batterie 102 atteigne le seuil de température prédéterminé,
- quand la température de la batterie est supérieure ou égale au seuil de température prédéterminé, pilotage de l'onduleur 103 de sorte à ne plus permettre l'échange d'énergie entre la batterie et les bobines de stator L1, L2, L3, et fermeture du premier commutateur secondaire DC+ et ouverture du commutateur de contournement 111.

## Revendications

1. Système de recharge pour un véhicule électrique ou hybride comprenant :
- un ensemble de consommateurs électriques (101) connectés entre une première borne primaire (A) et une deuxième borne primaire (B),
- une batterie (102) apte à fournir une tension de batterie, et apte à être connectée à la première borne primaire (A) au moyen d'un premier relais primaire (HV+) et à la deuxième borne primaire (B) au moyen d'un deuxième relais primaire (HV-),
- un onduleur (103) connecté à l'ensemble de consommateurs électriques (101) entre la première borne primaire (A) et la deuxième borne primaire (B) et comprenant une pluralité de bras d'onduleur (B1, B2, B3),
- une machine électrique (104) connectée à l'onduleur (103) de sorte que chaque bras d'onduleur (B1, B2, B3) soit respectivement relié électriquement à une bobine d'un stator (L1, L2, L3) de la machine électrique (104),
- un ensemble de filtrage (105) connecté à la machine électrique (104) et apte à être connecté à une première borne secondaire (C) du système de recharge au moyen d'un premier relais secondaire (DC+) et à une deuxième borne secondaire (D) du système de recharge au moyen d'un deuxième relais secondaire (DC-),
les première et deuxième bornes secondaires (C, D) étant destinées à être connectées à une source électrique externe (200) au véhicule,
la source électrique externe (200) étant destinée à fournir une tension externe,
- un ensemble de contournement (106) connecté entre la première borne secondaire (C) et la première borne primaire (A),
l'ensemble de filtrage (105) comprenant un commutateur de filtrage (110) configuré pour se fermer quand la tension externe est inférieure à la tension de batterie, et pour s'ouvrir quand la tension externe est supérieure ou égale à la tension de batterie,
l'ensemble de contournement (106) comprenant un commutateur de contournement (111) apte à se fermer pour assurer une connexion électrique entre la première borne secondaire (C) et la première borne primaire (A), et à s'ouvrir pour empêcher la connexion électrique entre la première borne secondaire (C) et la première borne primaire (A).

2. Système selon la revendication 1 dans lequel, si la température de la batterie (102) est inférieure à un seuil de température prédeterminé, l'onduleur (103) est piloté de sorte à permettre un échange d'énergie électrique entre la batterie (102) et le stator de la machine électrique (104) via l'onduleur (103) de sorte à augmenter la température de la batterie (102) jusqu'au seuil de température prédeterminé.

3. Système selon l'une des revendications 1 ou 2 dans lequel le système de recharge est configuré pour avoir l'un parmi les modes de fonctionnement suivant:
- un premier mode (M1), dit de veille, dans lequel chacun des premier commutateur primaire (HV+), deuxième commutateur primaire (HV-), premier commutateur secondaire (DC+), deuxième commutateur secondaire (DC-), commutateur de filtrage (110) et commutateur de contournement (111) est ouvert,
- un deuxième mode (M2), dit de préconditionnement, dans lequel si la température de la batterie (102) est inférieure à un seuil de température prédéterminé,
le premier commutateur primaire (HV+) et le deuxième commutateur primaire (HV-) sont fermés, le premier commutateur secondaire (DC+), le deuxième commutateur secondaire (DC-), et le commutateur de contournement (111) sont ouverts, et l'onduleur (103) est piloté de sorte à permettre un échange d'énergie électrique entre la batterie (102) et le stator de la machine électrique (104) via l'onduleur (103),
- un troisième mode (M3), dit de charge alternative, dans lequel le système est connectée à la source électrique externe (200), le premier commutateur primaire (HV+) et le deuxième commutateur primaire (HV-) sont fermés, le premier commutateur secondaire (DC+), le deuxième commutateur secondaire (DC-), et le commutateur de contournement (111) sont ouverts, et la batterie (102) fournit une énergie électrique à l'ensemble de consommateurs électriques (101),
- un quatrième mode (M4), dit d'arrêt, dans lequel le premier commutateur primaire (HV+) et le deuxième commutateur primaire (HV-) sont fermés, le premier commutateur secondaire (DC+), et le deuxième commutateur secondaire (DC-) sont ouverts, et l'onduleur (103) est piloté de sorte à permettre un échange d'énergie électrique entre la batterie (102) et le stator de la machine électrique (104) via l'onduleur (103) quand le commutateur de contournement (111) est fermé,
- un cinquième mode (M5), dit de roulage, dans lequel le premier commutateur primaire (HV+) et le deuxième commutateur primaire (HV-) sont fermés, le premier commutateur secondaire (DC+), et le deuxième commutateur secondaire (DC-) sont ouverts, et la batterie (102) fournit une énergie électrique à la fois à l'ensemble de consommateurs électrique (101), à l'onduleur (103), et à la machine électrique (104).

4. Système selon l'une des revendications précédentes dans lequel, si la source électrique externe (200) fournit une tension externe continue et supérieure ou égale à la tension de la batterie (102), le système de recharge peut avoir l'un des modes de fonctionnement suivant:
- un sixième mode (M6), dit de recharge à froid avant branchement, dans lequel
si la température de la batterie (102) est inférieure au seuil de température prédeterminé, et
si le système n'est pas connecté à la source électrique externe (200), le premier commutateur primaire (HV+) et le deuxième commutateur primaire (HV-) sont fermés, le premier commutateur secondaire (DC+), et le deuxième commutateur secondaire (DC-) sont ouverts, le commutateur de contournement (111) est ouvert, la batterie (102) alimentant électriquement l'ensemble des consommateurs électriques (101) et l'onduleur (103) et la machine électrique (104);
- un sixième mode bis (M6bis), dit de recharge à froid au branchement, si le système est connecté à la source électrique externe (200) fournissant une tension continue, et
si la température de la batterie (102) est inférieure au seuil de température prédeterminé,
le système communique avec la source électrique externe (200) afin que ladite source électrique externe (200) fournisse une tension ayant la même valeur que la tension de la batterie (102), et dès que la tension fournie par la source électrique externe (200) devient égale à la tension de la batterie (102), le commutateur de contournement (111) est fermé dans un premier temps et le deuxième commutateur secondaire (DC-) est fermé dans un deuxième temps;
- un sixième mode ter (M6 ter), dit de chauffage pendant le branchement, si le système est connecté à la source électrique externe (200) fournissant une tension continue, et
si la température de la batterie (102) est inférieure au seuil de température prédeterminé mais que ladite température de la batterie est en cours d'augmentation,
l'onduleur (103) est piloté de sorte à permettre un échange d'énergie entre la batterie (102) et le stator de la machine électrique (104) afin de réchauffer la batterie (102) jusqu'à ce que la température de la batterie (102) atteigne le seuil de température prédeterminé,
le système communique avec la source électrique externe (200) afin que la source électrique externe (200) alimente l'ensemble de consommateurs électriques (101);
- un sixième mode quater (M6 quater), dit de charge continue standard,
si le système est connecté à la source électrique externe (200) fournissant une tension continue, et
si la batterie (102) a une température au moins égale au seuil de température prédeterminé,
l'onduleur (103) est piloté de sorte à ne plus permettre l'échange d'énergie entre la batterie et les bobines de stator (L1, L2, L3) pour réchauffer la batterie,
le premier commutateur secondaire (DC+) est fermé, le commutateur de contournement (111) est ouvert, et le système communique avec la source électrique externe afin que ladite source électrique externe (200) augmente le courant fourni au système, de sorte à recharger la batterie (102) via les inductances du stator (L1, L2, L3).

5. Système selon l'une des revendications précédentes dans lequel, si la source électrique externe (200) fournit une tension externe continue et si la tension externe est inférieure à la tension de batterie (102), le système peut avoir le mode de fonctionnement suivant :
- un septième mode (M7), dit de charge à courant continu, dans tous les commutateurs sont fermés à l'exception du commutateur de contournement (111) qui est ouvert.

6. Système selon l'une des revendications précédentes dans lequel l'ensemble de contournement (106) comprend un dispositif semi-conducteur (112) connecté en série avec le commutateur de contournement (111).

7. Système selon la revendication 6 dans lequel le dispositif semi-conducteur (112) est configuré pour permettre une circulation du courant électrique uniquement de la source électrique externe (200) vers l'ensemble de consommateurs électriques (101).

8. Système selon l'une des revendications 6 ou 7 dans lequel le dispositif semi-conducteur (112) est une diode et le commutateur de contournement (111) est un relais.

9. Système selon l'une des revendications précédentes dans lequel l'ensemble de filtrage (105) comprend un condensateur de filtrage (113) en série avec le commutateur de filtrage (110), et une résistance connectée en parallèle du condensateur de filtrage (113).

10. Système selon l'une des revendications 1 à 5 et 9 dans lequel le commutateur de contournement (111) comprend un dispositif d'aiguillage (300), et l'ensemble de consommateurs (101) comprend un chargeur embarqué (OBC) connecté entre la première borne primaire (A) et la deuxième borne primaire (B), et connecté d'une part à un compresseur de climatisation (CA), et d'autre part à un convertisseur courant continu-courant continu (DC/DC), le dispositif d'aiguillage (300) étant configuré pour se connecter électriquement au compresseur de climatisation (CA) et pour relier sélectivement le compresseur de climatisation (CA) à la source électrique externe (200) ou à la batterie (102).

11. Véhicule électrique ou hybride comprenant le système selon l'une des revendications 1 à 10.

12. Structure de recharge pour véhicule électrique ou hybride comprenant :
- le système de recharge selon l'une revendications 1 à 10,
- la source électrique externe (200) connectée au système de recharge.

13. Procédé d'alimentation d'un véhicule électrique ou hybride, le procédé étant mis en œuvre par le système de recharge selon l'une quelconque des revendications 1 à 10,
le procédé d'alimentation comprenant une étape de sélection d'un mode de fonctionnement du système parmi les modes de fonctionnement du système présentés dans les revendications 3 à 5, en fonction de l'un ou plusieurs des paramètres suivants :
- la valeur de la tension externe,
- la température de la batterie (102),
- le branchement ou non du système à la source électrique externe (200),
- un état de charge de la batterie (SoC).

14. Procédé selon la revendication 13 dans lequel, si la source électrique externe (200) fournit une tension continue supérieure ou égale à la tension de la batterie (102), et si la température de la batterie (102) est inférieure à un seuil de température prédéterminé,
une sélection successive des modes de fonctionnement M6, M6 bis, M6 ter et M6 quater du système s'opère, et le procédé comprend les étapes suivantes:
- fermeture du premier commutateur primaire (HV+) et du deuxième commutateur primaire (HV-), ouverture du premier commutateur secondaire (DC+), du deuxième commutateur secondaire (DC-) et du commutateur de contournement (111),
- branchement du système à la source électrique externe (200),
- fermeture du commutateur de contournement (111) dans un premier temps et du deuxième commutateur secondaire (DC-) dans un deuxième temps,
- tant que la température de la batterie (102) est inférieure au seuil de température prédéterminé, pilotage de l'onduleur de sorte à permettre un échange d'énergie entre la batterie (102) et le stator de la machine électrique (104) afin de réchauffer la batterie (102) jusqu'à ce que la température de la batterie (102) atteigne le seuil de température prédéterminé,
- quand la température de la batterie est supérieure ou égale au seuil de température prédéterminé, pilotage de l'onduleur (103) de sorte à ne plus permettre l'échange d'énergie entre la batterie et les bobines de stator (L1, L2, L3), et fermeture du premier commutateur secondaire (DC+) et ouverture du commutateur de contournement (111).
